# EUROPEAN PATENT APPLICATION

(11) **EP 1 589 671 A1**
(43) Date of publication of application: **26.10.2005**
(21) Application number: 04029360.7
(22) Date of filing: 10.12.2004
(51) Int. Cl.: H04B 3/54, H04B 3/56

(54) **Radio access line extending device**

(30) Priority: 21.04.2004 JP 2004125839
(71) Applicant: MITSUBISHI DENKI KABUSHIKI KAISHA, Tokyo 100-8310 (JP)
(72) Inventor: Narikawa, Masafumi, Tokyo 100-8310 (JP)
(74) Representative: Sajda, Wolf E.

(57) **Abstract**

The radio access line extending device includes: a subscriber outdoor device 6 for communicating with a radio base station 1 by radio; a subscriber media converter 11 for converting communication data which has been received from the radio base station 1 by the subscriber outdoor device 6 in media to output the converted media to a subscriber indoor electric lamp wire 12; and a subscriber router 13 that receives the communication data which is transmitted through the subscriber indoor electric lamp wire 12, and outputs the communication data to a subscriber personal computer 14. The subscriber outdoor device 6 and the subscriber media converter 11 are connected to each other through a cable 7, and the cable 7 is drawn into a subscriber's home through a hole 15 for a drain pipe 9 of an air conditioner 10.

## Description

### BACKGROUND OF THE INVENTION

### 1. Field of the Invention

The present invention relates to a radio access line extending device, and more particularly to a radio access line extending device for extending a subscriber radio access line by using as a communication line an indoor electric power line arranged within a subscriber's home.

### 2. Description of the Related Art

In a conventional communication network system, individual dedicated lines are wired for respective terminal devices as transmission media (transmission line). Under the circumstances, a large amount of labor is given for engineering works such as the new wiring, addition, or transfer of dedicated lines, and there incurs a large amount of waste such that the dedicated lines that become unnecessary after modifications are left over.

Under the above circumstances, a communication network system using as a communication line an indoor electric power line has been proposed (for example, refer to JP 2001-094482 A).

However, in the case where an indoor electric power line is used for a communication line, it is impossible to satisfactorily take advantage of the functions of the network without providing means for managing the respective terminal devices connected to the indoor electric power line and monitoring a state of a network structured by the indoor electric power line. For that reason, in the conventional communication network system disclosed in JP 2001-094482 A, a communication control unit is provided, which is connected to the indoor electric power lines of respective systems in the vicinity of a distribution switchboard and is in turn connected to an external communication network, and the communication control unit conducts communication control of the communication network using the indoor electric power lines and communication control in association with the external communication network.

In recent years, attention has been rapidly paid to a radio communication technology. When the radio communication technology is going to be applied to the conventional system disclosed in the above-mentioned JP 2001-094482 A, because a radio base station is generally placed on an outdoor electric pole. Therefore, it is necessary to locate a subscriber outdoor device outside a room, for example, at a veranda and to connect an indoor electric power line to the subscriber outdoor device for the purpose of conducting radio communication with the radio base station within the room. To achieve this, engineering works for piercing a wall are required in the aim of drawing a power cable for connecting the subscriber outdoor device and the indoor electric power lines into the room. The engineering works cause a problem in that installation costs are high.

In addition, in the case where the above-mentioned power cable is used for power supply and an Ethernet (trade name) cable (hereinafter refer to as "LAN cable") is employed as the communication line, engineering works for piercing a wall are required in the aim of drawing the LAN cable and the power cable into the room. The engineering works lead to the higher installation costs. Moreover, it is necessary to extend the LAN cable up to the vicinity of a personal computer equipped within the home. This causes a problem in that the installation costs are high.

### SUMMARY OF THE INVENTION

The present invention has been made to solve the above problems, and therefore an object of the present invention is to provide a radio access line extending device, which does not require such specific engineering works as to pierce an outer wall of a subscriber' s home at all, and which lessens the installation costs.

According to the present invention, a radio access line extending device for connecting a radio base station and a subscriber terminal device includes: a subscriber outdoor device for communicating with the radio base station by radio; and a subscriber media converter connected to the subscriber outdoor device for converting communication data which has been received from the radio base station by the subscriber outdoor device in media to output the converted media to a subscriber indoor electric lamp wire. The radio access line extending device also includes a subscriber router that is connected to the subscriber indoor electric lamp wire, receives the communication data which is transmitted through the subscriber indoor electric lamp wire, and outputs the communication data to the subscriber terminal device. In the radio access line extending device, it is desirable that the subscriber outdoor device and the subscriber media converter be connected to each other through a cable, and the cable be drawn into a subscriber's home through a duct hole for an air conditioner.

According to the present invention, there is provided a radio access line extending device, which does not require such specific engineering works as to pierce an outer wall of a subscriber' s home at all, and which lessens the installation costs.

### BRIEF DESCRIPTION OF THE DRAWINGS

In the accompanying drawings:
Fig. 1 is a structural diagram showing the structure of a subscriber radio access line extending device according to a first embodiment of the present invention;
Fig. 2 is a structural diagram showing the structure of a subscriber radio access line extending device according to a second embodiment of the present invention; and
Fig. 3 is a structural diagram showing the structure of a subscriber radio access line extending device according to a fourth embodiment of the present invention.

### DETAILED DESCRIPTION OF THE PREFERRED EMBODIMENTS

### <First Embodiment>

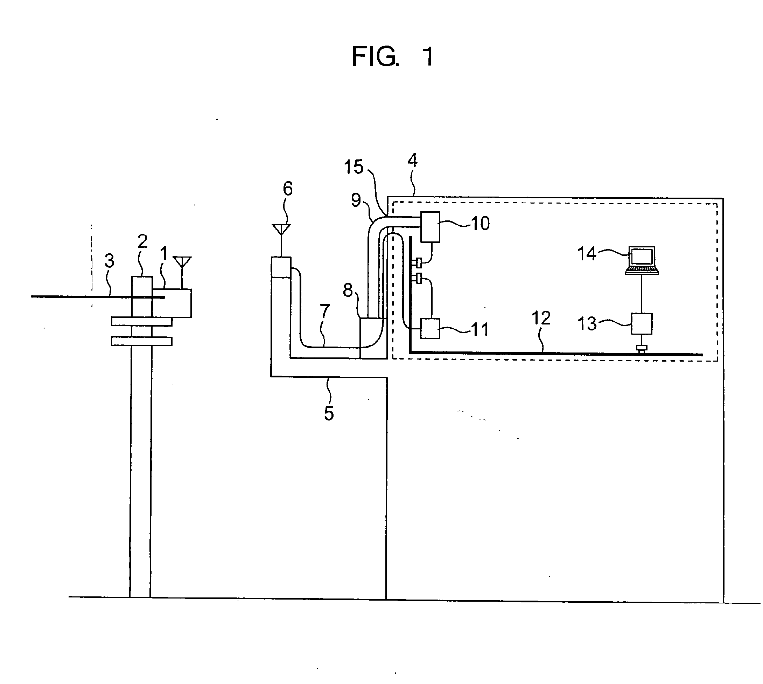

Fig. 1 is a structural diagram showing a subscriber radio access line extending device according to a first embodiment of the present invention. As shown in Fig. 1, the subscriber radio access line extending device according to this embodiment is equipped with a subscriber outdoor device 6 that conducts radio communication with a radio base station 1 which is placed on an electric pole 2 and connected to an external communication line 3. The subscriber outdoor device 6 is located on a veranda 5 of a collective housing 4. The subscriber outdoor device 6 is connected with a feeder Ethernet cable 7 (hereinafter referred to as "feeder LAN cable 7") which is connected to an indoor electric lamp wire 12 through a subscriber media converter 11. In recent years, there are many cases in which an outdoor device 8 for an air conditioner is located on the veranda 5, and a drain pipe 9 (duct) is used to connect the outdoor device 8 and an air conditioner 10 that is located indoors. For that reason, in the existing housing, it goes without saying that a hole 15 for the drain pipe 9 (duct hole) is always pierced in a wall during construction. In the subscriber radio access line extending device according to the first embodiment, the feeder LAN cable 7 is in turn drawn into the room through the hole 15 for the drain pipe 9. Also, a personal computer 14 that is a subscriber terminal device which is placed within the room is connected to the indoor electric lamp wire 12 through an indoor router 13.

Subsequently, the operation of the subscriber radio access line extending device according to the first embodiment will be described with reference to Fig. 1. The radio base station 1 is located on the electric pole 2 that is connected to an external network such as the Internet or a telephone line by means of the communication line 3. The subscriber outdoor device 6 is placed on the veranda 5 of the subscriber' s home in the collective housing 4 for the purpose of conducting radio communication with the radio base station 1. Also, the subscriber outdoor device 6 can communicate with the subscriber media converter 11 by means of the feeder LAN cable 7. In addition, an electric power that is required by the subscriber outdoor device 6 is fed by means of the feeder LAN cable 7 through the subscriber media converter 11. For example, a "power on Ethernet" technique is employed as a feeding method by means of the Ethernet cable. The outdoor device 8 for the air conditioner is connected to the air conditioner 10 through the drain pipe 9, and the feeder LAN cable 7 is in turn drawn into the room through the hole 15 that is pierced in the wall in use for the drain pipe 9. The subscriber media converter 11 communicates with the indoor router 13 by means of the indoor electric lamp wire 12. The personal computer 14 is connected to the indoor router 13.

As described above, according to the first embodiment, the indoor personal computer 14 can be connected to the external network through the indoor router 13, the indoor electric lamp wire 12, the subscriber media converter 11, the feeder LAN cable 7, the subscriber outdoor device 6, the radio base station 1, and the communication line 3. In addition, the feeder LAN cable 7 that is to be drawn into the room from the external is drawn into the room through the existing hole 15 for the drain pipe 9 of the air conditioner. As a result, since the feeder LAN cable 7 can be readily drawn into the room without requiring such specific engineering works as to pierce the wall at all, the radio access line extending device with lessening the installation costs can be realized. Also, since the subscriber radio access line can be extended without laying the dedicated communication line within the room, the installation costs can be further reduced.

### <Second Embodiment>

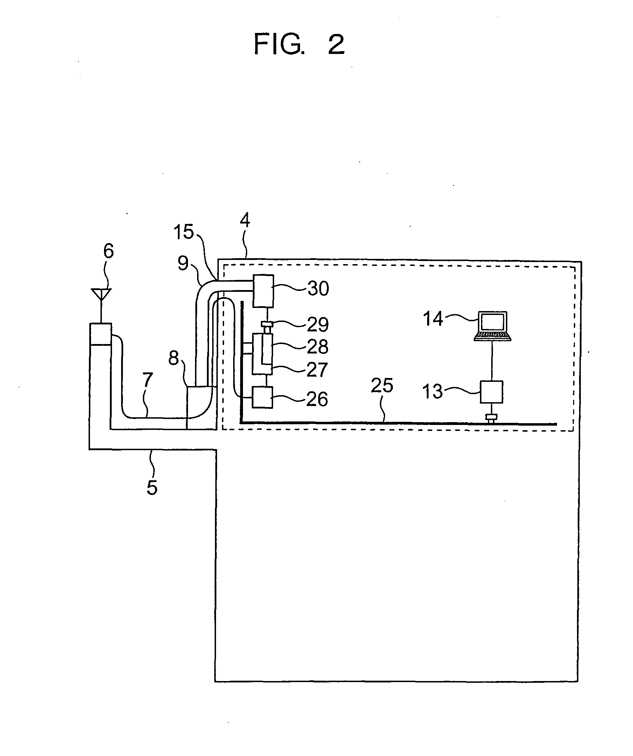

Fig. 2 is a structural diagram showing the structure of a subscriber radio access line extending device according to a second embodiment of the present invention, which is different from the above-mentioned first embodiment in that a subscriber media converter and an air conditioner are connected to an indoor electric lamp wire through a common mains connector 27 having a noise filter. The same structures as those in Fig. 1 are designated by identical marks, and their description will be omitted hereinafter.

In the subscriber radio access line extending device according to the second embodiment, as shown in Fig. 2, the subscriber media converter 26 is connected to the indoor electric lamp wire 25 by the mains connector 27 having a noise filter 28. The mains connector 27 with the noise filter 28 has the noise filter 28 built-in. The air conditioner 30 is connected to the indoor electric lamp wire 25 through the mains connector 27 having the noise filter 28 by the power cable 29.

The air conditioner 30 generates noises, and the noises are conducted by the power cable 29. However, because the noises are cut off by the noise filter 28, the supply of the noises to the power line communication through the indoor electric lamp wire 25 which is attributable to the subscriber media converter 26 can be reduced.

As described above, according to the second embodiment, the same advantages as those in the above-mentioned first embodiment are obtained. At the same time, the supply of the noises to the power line communication which is attributable to the subscriber mediaconverter 26 can be reduced because the noises that are generated in the air conditioner 30 are cut off by the noise filter 28 with the provision of the mains connector 27 having the noise filter 28 between the air conditioner 30 and the indoor electric lamp wire 25.

### <Third Embodiment>

Subsequently, a description will be given of a subscriber radio access line extending device according to a third embodiment of the present invention.

In recent years, there arises a problem of the security of radio communication. For example, in a radio LAN of 2.4 GHz, a communication data encrypting system that is called "WAP (wire equivalent privacy)" is normally employed. The power line communication in turn raises a problem of security since a plurality of users conduct communication by means of a common electric lamp wire. A method that solves the above problem and allows a subscriber to readily conduct the setting of security on a device will be described with reference to the third embodiment. The structure of the subscriber radio access line extending device according to the third embodiment will be omitted from description because of the same structure as that of the above-mentioned first or second embodiment. Also, in the following description, an example in which the third embodiment is applied to the structure of the first embodiment will be described.

According to the third embodiment, in the structure of the above-mentioned first or second embodiment, the external communication line 3 is connected to the Internet, and an ISP (Internet service provider) that serves an Internet access attributable to the subscriber radio access line distributes keys of cryptography (cryptographic keys) which vary from one subscriber to another.

The subscriber registers the subscriber outdoor device 6, the subscriber media converter 11, and the cryptographic key that has been distributed to the indoor router 13 by means of the personal computer 14.

The radio base station 1 is structured so as to accept only data that has been encrypted by the distributed key and not to accept other data. Also, data that has been encrypted by a certain key can be decrypted by only that key. This makes it possible to prevent the subscriber from another subscriber's data snooping.

Usually, a cryptographic key for the indoor network and a cryptographic key for the access network are separated. On the other hand, in the third embodiment, since those cryptographic keys are standardized, the subscriber is capable of simply conducting setting of the keys.

As described above, according to this embodiment, the same advantages as those in the above-mentioned first and second embodiments are obtainable. In addition, the security of communication is ensured since the radio base station 1 is structured so as to accept only data that has been encrypted by the key distributed by the ISP and not to accept other data, and, at the same time, the subscriber can readily set the cryptographic key of communication since the cryptographic key is registered through the personal computer 14.

### <Fourth Embodiment>

Subsequently, a description will be given of a subscriber radio access line extending device according to a fourth embodiment of the present invention.

The collective housing frequently raises such a problem in that there are rooms that can enjoy an Internet access service and other rooms that cannot enjoy the Internet access service even in one collective housing in the case where there is no veranda for locating the subscriber outdoor device depending on the layout of a house, or a veranda does not face the radio base station. In this embodiment, a method for solving this problem will be described.

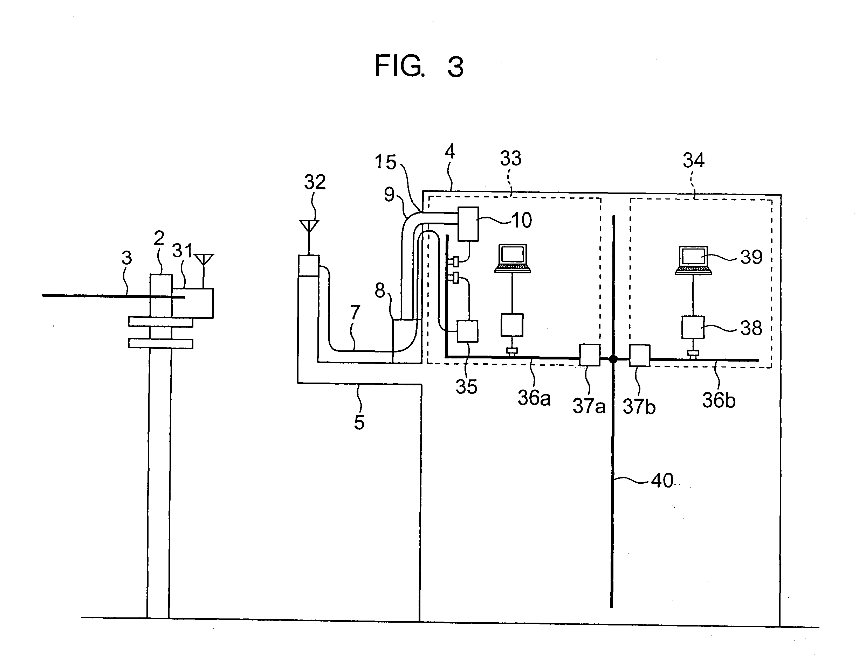

Fig. 3 is a structural diagram showing the structure of a subscriber radio access line extending device according to the fourth embodiment of the present invention. The structure of the fourth embodiment is to add another subscriber's home B34 to the structure of Fig. 1 which is described in the first embodiment.

As shown in Fig. 3, the subscriber radio access line extending device according to this embodiment includes a subscriber outdoor device 32 for conducting radio communication with a radio base station 31 that is placed on an electric pole 2 and connected to an external communication line 3, as in Fig. 1. The subscriber outdoor device 32 is placed on the veranda 5 of a subscriber's home A33. The subscriber outdoor device 32 is connected with a feeder LAN cable 7 and connected to an indoor electric lamp wire 36a though a subscriber media converter 35 that is located within the room of the subscriber' s home A33. In the fourth embodiment, the feeder LAN cable 7 is in turn drawn into the room through the hole 15 for the drain pipe 9 of the air conditioner 10, as in Fig. 1. Also, the personal computer 14 that is equipped within the room of the subscriber's home A33 is connected to the indoor electric lamp line 36a through the indoor router 13.

Also, as shown in Fig. 3, the personal computer 39 that is equipped within the room of the subscriber's home B34 is connected to the indoor electric lamp wire 36b through the indoor router 38. The subscriber's home B34 has no veranda and provides no location at which the subscriber outdoor device is placed. Under the circumstances, distribution switchboards 37a and 37b are equipped in the subscriber's home A33 and the subscriber's home B34, respectively, and the indoor electric lamp wire 36a of the subscriber's home A33 and the indoor electric lamp wire 36b of the subscriber's home B34 are connected to each other through the distribution switchboards 37a and 37b. Those indoor electric lamp wires may be connected directly to each other not through the distribution switchboards 37a and 37b. However, it is desirable to make an adjustment in those distribution switchboards 37a and 37b since the personal computers of the respective rooms cannot always communicate when the wiring systems of the indoor electric lamp wires vary from one room to another. With this structure, the personal computer 39 of the subscriber's home B34 can be connected to an external network through the subscriber router 38, the indoor electric lamp wire 36b, the distribution switchboard 37b, the distribution switchboard 37a, the indoor electric lamp wire 36a, the subscriber media converter 35, the feeder LAN cable 7, the subscriber outdoor device 32, and the radio base station 31.

As described above, in this embodiment, the same advantages as those in the above-mentioned first embodiment are obtainable. In addition, even in the subscriber's home B34 with no veranda and no location at which the subscriber outdoor device is placed, because the indoor electric lamp wires are connected to each other through the distribution switchboards, the personal computer of the subscriber' s home B34 can be connected to the external network through the subscriber router 38, the distribution switchboards 37a, 37b, the subscriber media converter 35, the subscriber outdoor device 32, and the radio base station 31, to thereby enhance the convenience.

Also, since a radio channel that is employed by the subscriber radio access line can be commonly used by a plurality of subscribers, the channel can be saved.

When the indoor electric lamp wire 40 that extends over the respective floors heightwise of the collective housing 4 is in turn connected between the respective rooms through the distribution switchboards, even in the subscriber's homes at different floors or in the case where there is no veranda and there is no location at which the subscriber outdoor device is placed, the personal computer equipped indoors can be connected to the external network, to thereby further enhance the convenience. In particular, the above-mentioned structure is effective in a room at a basement floor or the like.

## Claims

1. A radio access line extending device for connecting a radio base station (1; 31) and a subscriber terminal device (14; 39), comprising:
a subscriber outdoor device (6; 32) for communicating with the radio base station (1; 31) by radio;
a subscriber media converter (11; 26; 35) connected to the subscriber outdoor device (6; 32) formedia-converting communication data which has been received from the radio base station (1; 31) by the subscriber outdoor device (6; 32) to output the converted media to a subscriber indoor electric lamp wire (12; 25; 36a, 36b); and
a subscriber router (13; 38) that is connected to the subscriber indoor electric lamp wire (12; 25; 36a, 36b), receives the communication data which is transmitted through the subscriber indoor electric lamp wire (12; 25; 36a,36b), and outputs the communication data to the subscriber terminal device (14; 39),
wherein the subscriber outdoor device (6; 32) and the subscriber media converter (11; 26; 35) are connected to each other through a cable (7) , and the cable (7) is drawn into a subscriber' s home through a duct hole (15) for an air conditioner (10, 30).

2. A radio access line extending device according to claim 1, wherein the subscriber media converter (26) and the air conditioner (30) are connected to the subscriber indoor electric lamp wire (25) through a common main connector (27), and
wherein the main connector (27) includes a noise filter (28) for removing noises that are generated by the air conditioner (30).

3. A radio access line extending device according to claim 1 or 2, wherein the communication data that is transmitted/received between the radio base station (1; 31) and the subscriber terminal device (14; 39) is encrypted before being transmitted/received between the radio base station (1; 31) and the subscriber terminal device (14; 39).

4. The radio access line extending device according to any one of claims 1 to 3, wherein a plurality of subscriber's homes (33, 34) are provided, and
wherein two or more subscriber indoor electric lamp wires (36a, 36b) are connected to one subscriber outdoor device (32) through the subscriber media converter (35).
